# EUROPEAN PATENT APPLICATION

(11) **EP 4 307 226 A1**
(43) Date of publication of application: **17.01.2024**
(21) Application number: 23184675.9
(22) Date of filing: 11.07.2023
(51) Int. Cl.: G06T 7/11, G06T 7/136, G06T 7/155

(54) **INFERRING THE AMOUNT OF LIQUID CONTAINED IN A TRANSPARENT VESSEL THROUGH IMAGE SEGMENTATION**

(30) Priority: 15.07.2022 US 202217866375
(71) Applicant: B/E Aerospace, Inc., Winston-Salem, NC 27105 (US)
(72) Inventor: SALINAS HERNANDO, Gonzalo, Cork, T12 X2TN (IE); PALOP, Hector, Cork, T12 EV79 (IE)
(74) Representative: Dehns

(57) **Abstract**

A method for operating an image segmentation system includes receiving image data from a sensor, detecting a vessel is present in the image data, extracting a region of interest, and classifying the image data based on the region of interest.

## Description

### FIELD

The present disclosure relates generally to image processing, more specifically, liquid level detection via image segmentation.

### BACKGROUND

Air travelers, and particularly those traveling in premium seating classes, have needs that are attended to by the flight crew. Passenger needs may include, for example, food, drink, privacy, sleep, comfort and technology requests, among others. In conventional airliners, flight crew actions are typically on-demand responsive to individual passenger requests. Requests may be initiated by passengers via verbal communications to the flight crew, service crew call buttons, etc. Such modes of communication have inherent delays in response times because of the ways in which requests are made and processed, the number of outstanding requests, flight crew member availability, flight crew interactions, etc.

### SUMMARY

A method for operating an image segmentation system is disclosed herein. The method includes receiving image data from a sensor, detecting a vessel is present in the image data, extracting a region of interest, and classifying the image data based on the region of interest.

In various embodiments, the method includes continuously capturing the image data.

In various embodiments, the method includes processing the image data.

In various embodiments, processing the image data includes segmenting the image data.

In various embodiments, the method includes determining the segmented image data is below a threshold level.

In various embodiments, the method includes transmitting a notification in response to the segmented image data being below the threshold level.

In various embodiments, the sensor is a camera.

A method of image segmentation processing of an image segmentation system is also disclosed herein. The method includes receiving a raw image, converting the raw image to a colorsspace to produce a converted image, performing adaptive thresholding on the converted image to produce a threshold image, eroding the threshold image, dilating the threshold image, combining the eroded threshold image and the dilated threshold image to form a reference image, comparing the raw image with the reference image to determine a region of interest, and comparing the region of interest to a height of the raw image to determine a ratio of the region of interest to the height.

In various embodiments, the ratio of the region of interest to the height of the raw image is indicative of an amount of liquid in a vessel.

In various embodiments, the eroded threshold image is a foreground image.

In various embodiments, the dilated threshold image is a background image.

In various embodiments, the region of interest is within a limit of the foreground image and a limit of the background image.

In various embodiments, eroding the threshold image comprises trimming an edge of the threshold image.

In various embodiments, dilating a threshold image comprises making an edge larger.

In various embodiments, the method further includes neutering the background to set an absolute mean value.

In various embodiments, the colorspace is RGB, HSV, or YCbCr.

A non-transitory, tangible computer readable storage medium having instructions stored thereon that, in response to execution by a processor, cause the processor to perform operations is described herein. The operations include receiving a raw image, converting the raw image to a colorspace to produce a converted image, performing adaptive thresholding on the converted image to produce a threshold image, eroding the threshold image, dilating the threshold image, combining the eroded threshold image and the dilated threshold image to form a reference image, comparing the raw image with the reference image to determine a region of interest, and comparing the region of interest to a height of the raw image to determine a ratio of the region of interest to the height.

In various embodiments, the operations include eroding the threshold image to form a foreground image.

In various embodiments, the operations include dilating the threshold image to form a background image.

In various embodiments, the operations include neutering the background to set an absolute mean value.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an image segmentation system, in accordance with various embodiments;
FIG. 2 illustrates a method for operating the image segmentation system of FIG. 1, in accordance with various embodiments;
FIG. 3 illustrates a method of image segmentation, in accordance with various embodiments;
   and
FIGS. 4A-4B illustrate experimental data results of the method of FIG. 3, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

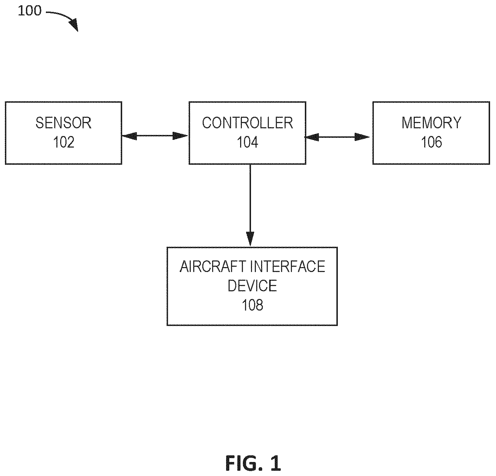

Referring to FIG. 1, a schematic view of an image segmentation system 100 is illustrated, in accordance with various embodiments. The image segmentation system 100 comprises a sensor 102, a controller 104, a memory 106, and an aircraft interface device 108.

The image segmentation system 100 includes the controller 104 and the memory 106 (e.g., a database or any appropriate data structure; hereafter "memory 106" also may be referred to as "database 106"). The controller 104 may include one or more logic devices such as one or more of a central processing unit (CPU), an accelerated processing unit (APU), a digital signal processor (DSP), a field programmable gate array (FPGA), an application specific integrated circuit (ASIC), or the like (e.g., controller 104 may utilize one or more processors of any appropriate type/configuration, may utilize any appropriate processing architecture, or both). In various embodiments, the controller 104 may further include any non-transitory memory known in the art. The memory 106 may store instructions usable by the logic device to perform operations. Any appropriate computer-readable type/configuration may be utilized as the memory 106, any appropriate data storage architecture may be utilized by the memory 106, or both.

The database 106 may be integral to the image segmentation system 100 or may be located remote from the image segmentation system 100. The controller 104 may communicate with the database 106 via any wired or wireless protocol. In that regard, the controller 104 may access data stored in the database 106. In various embodiments, the controller 104 may be integrated into computer systems within an aircraft cabin. Furthermore, any number of conventional techniques for electronics configuration, signal processing and/or control, data processing and the like may be employed. Also, the processes, functions, and instructions can include software routines in conjunction with processors, etc.

System program instructions and/or controller instructions may be loaded onto a non-transitory, tangible computer-readable medium having instructions stored thereon that, in response to execution by the processor, cause the controller 104 to perform various operations.

In various embodiments, the sensor 102 is in operable communication with the controller 104. Similarly, the controller 104 is in operable communication with the aircraft interface device 108. In various embodiments, the sensor 102 is configured to detect image data and send the image data to the controller 104. In various embodiments, the controller 104 may perform image segmentation as described further herein.

The image segmentation system 100 may contain one or more of the sensors 102, for instance, the sensor 102 may be image sensors, cameras, and motion sensors placed at different locations within the aircraft cabin. The image sensor 102 (e.g., camera) may be used to detect the liquid level within a passenger's cup. The sensor 102 may be commanded by the controller 104, via, for example, the aircraft interface device (AID) 108, to scan the aircraft cabin, capture image data, and relay the data to the AID. Image data may be, for example, images and video feeds. The AID may activate a camera, commanding it to begin recording the aircraft cabin and capturing images of the aircraft cabin. The AID may interface with and relay data (including images and videos) to on board video storage systems, on ground infrastructure, and avionics systems aboard the aircraft. On board infrastructure may be, for example, a cloud.

The AID may process the data using Machine Learning and/or Deep Learning pre-trained neural networks to identify threats and/or classify events occurring within the aircraft cabin. Machine Learning may be, for example, a method of data analysis that automates analytical model building. Deep Learning may be a subset of Machine Learning, comprising multiple layers of analysis. Any of the operations may be conducted or enhanced by artificial intelligence (AI) or machine learning. AI may refer generally to the study of agents (e.g., machines, computer-based systems, etc.) that perceive the world around them, form plans, and make decisions to achieve their goals. Foundations of AI include mathematics, logic, philosophy, probability, linguistics, neuroscience, and decision theory. Many fields fall under the umbrella of AI, such as computer vision, robotics, machine learning, and natural language processing. Useful machines for performing the various embodiments include general purpose digital computers or similar devices. The AI or ML may store data in a decision tree in a novel way.

The image segmentation system 100 may include a machine learning module. The machine learning module may be a software module that may be executed by controller 104 and stored on memory 106. In various embodiments, the machine learning module may comprise one or more modules such as one or more machine learning model modules and a decision making logic module designed for the image segmentation system 100. The one or more machine learning models may be classification models. In various embodiments, the classification models are pretrained prior to use in the image segmentation system 100. In various embodiments, machine learning module receives the sensor data from another module or hardware component. Machine learning module receives the sensor data from the sensor 102, analyzes the sensor data, and provides an action to perform. Machine learning module may then send a message to a message server (e.g., the AID) indicating the action to perform.

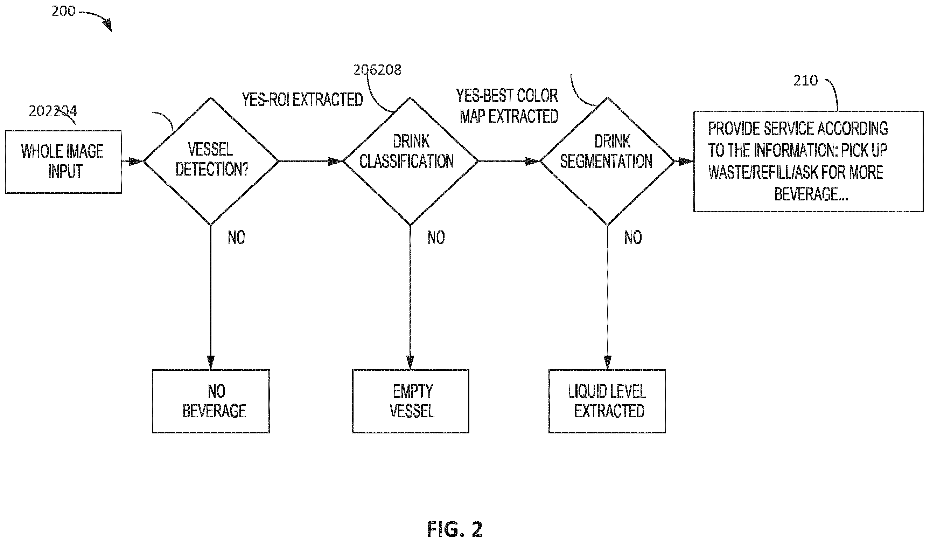

Referring to FIG. 2, a method 200 for operating the image segmentation system 100 is shown. As shown in FIG. 1, the method may comprise receiving (step 202), by an aircraft interface device (AID), image data from a camera of an aircraft cabin. The method may further comprise detecting (step 204) whether a vessel (e.g., a cup, a glass, etc.) is present. If NO, the controller 104 may end the method 200 or loop back to step 202. If YES, a region of interest (ROI) is extracted. The method includes drink classification of the vessel (step 206). For instance, if the vessel is holding liquid, the method moves to the next step. If NO, the method the controller 104 may end the method 200 or loop back to step 202.

Accordingly, the method may further comprise processing by the controller, the captured image data. The processing step may comprise the AID in electrical communication with the cameras and sensors, wherein the camera, sensors, and AID are in a continuous command and feedback loop to capture view(s) of the aircraft (step 202). The image data may be sent (step 204) to the AID from the cameras after processing. In various embodiments, the AID may be configured to process the image data for event detection. In various embodiments, the AID may be configured to process the image data for enhancement and may command the cameras to do the same. In various embodiments, the AID may perform the first level of filtering and enhancement.

The processing step may further comprise image segmentation (step 208). Upon image segmentation, image extraction may be performed based on localization and segmentation techniques. In various embodiments, the controller 104 may be configured to deploy pre-trained neural network based algorithms. Each extracted image may be further processed through the trained deep neural network for object and/or movement classification. The image segmentation detects a liquid level in the vessel. If the liquid level extracted is not below a threshold level (e.g., NO at step 208), the controller provides a command for service according to the information detected (step 210). For instance, if the liquid level extracted is below the threshold level, the flight crew will be notified to pick up the empty vessel, fill up the vessel with the passenger's desired drink, etc.

By segmenting the region of the image containing the liquid, the liquid level from that extracted shape can more easily be inferred. This approach is much more robust than performing edge detection, especially in situations where the background is not a plain white screen, such as the inside an aircraft. Further, coloration can be contrast-stretched to offer much more consistent results under varying lighting conditions. The state-of-the-art way of solving image segmentation is through machine learning methods, but it can also be reliably achieved through conventional image processing techniques, e.g., when the data required to train a machine learning model is not available.

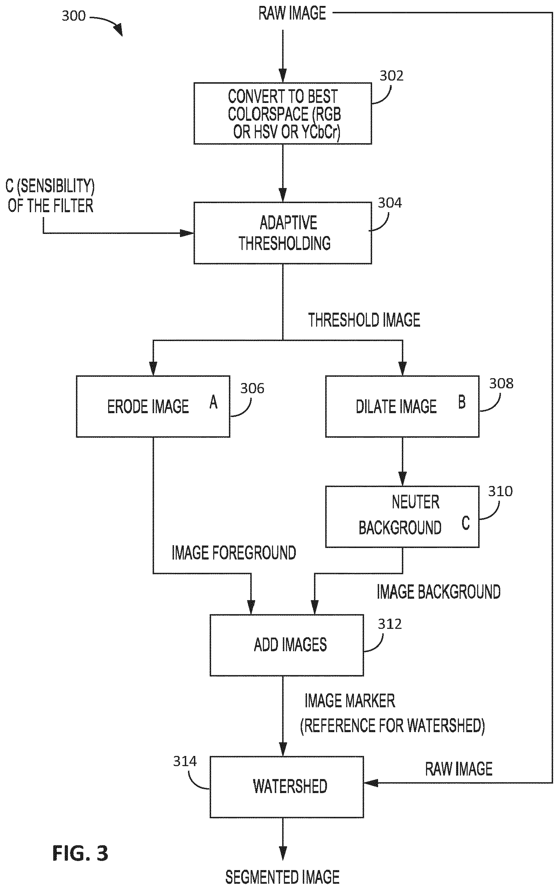

Referring now to FIG. 3, a method 300 detailing the image segmentation processing of the image segmentation system 100 is illustrated. At 302, the raw image is converted to an optimal colorsspace (e.g., RGB, HSV, YCbCr, etc.). For general uses, the HSV colorspace tends to be the most versatile, but under certain lighting conditions, the YCbCr colorspace may result in a better performance. At 304, known techniques for adaptive thresholding may be performed. For instance, the OTSU method is a technique in image processing that automatically finds the best or nearly the best thresholding of a monochromatic image value by evaluating the cumulative moments of the gray-level histogram. Input C is indicative of the threshold value set for the image. Adaptive thresholding, however, performs a region-by-region based thresholding where each region is locally segmented with OTSU. This approach results in a much more versatile and robust solution than simple thresholding. Because it is region-based, it is still effective when some areas appear brighter due to non-homogenous lighting all around the image.

The produced threshold image is then processed into an eroded image at 306 and a dilated image at 308. This process corresponds to the Watershed segmentation algorithm wherein an "image marker" is used as a reference to perform the segmentation. This marker is generated by overlapping one image mask that contains what is the object (called foreground) and one other mask that contains what is not part of the object (called background). In order to obtain these masks, the eroding and dilating processes are conducted. For instance, at 306, eroding a segmented object comprises trimming the edges of the segmentation, on the basis that the internal surface of the segmentation is more likely to in fact belong to the object than the parts that are near the edges. The resulting mask will have the same number of segmented objects than the original, but reduced in size. At 308, dilating a segmented object achieves the opposite effect. Instead of trimming out the edges, they are made larger, which reciprocally makes the background area smaller. Further, at 310, neutering the background sets the background at an absolute mean value. In various embodiments, the absolute mean value may be a pixel value. The pixel value may represent the brightness of the pixel. For instance, in the HSV colorspace, the pixels are characterized by their Hue, Saturation and Value. Accordingly, the latter is the point of interest for conducting the thresholding operations. At 312, the two resulting images (the foreground image and the background image) are combined to create the image marker, or the reference image.

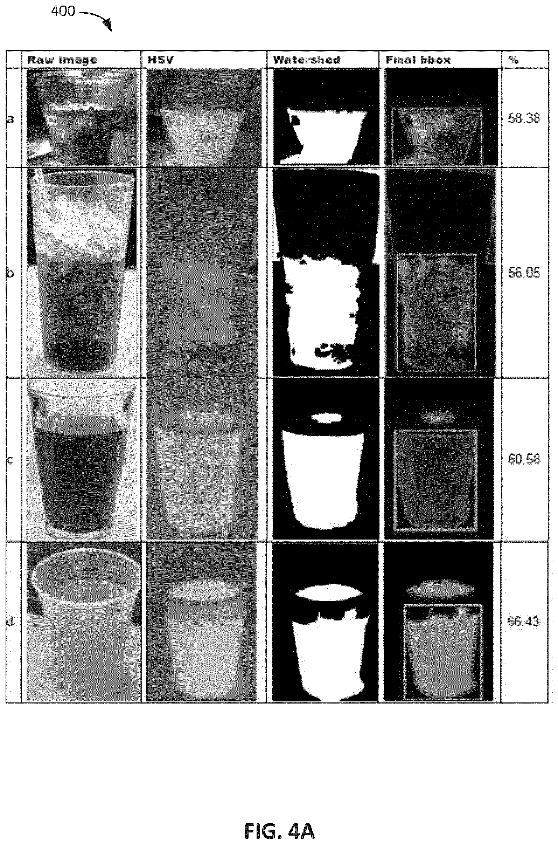

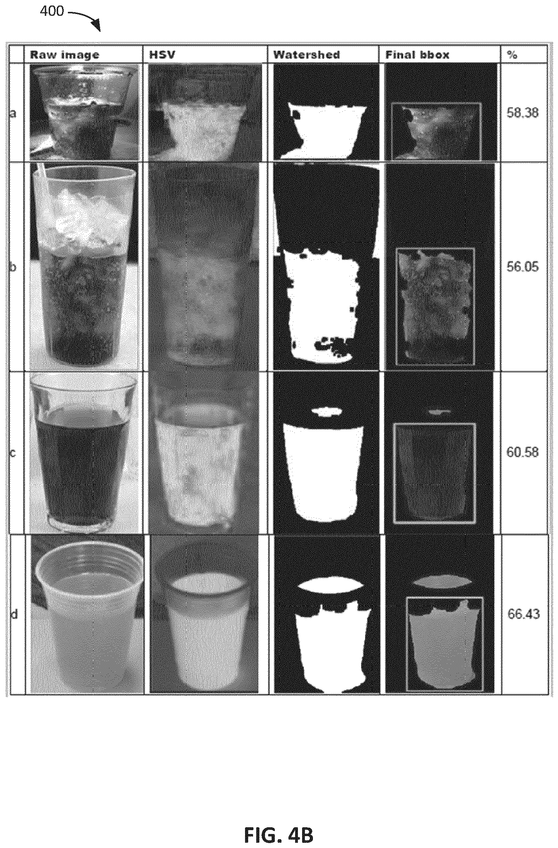

At 314, the method 300 compares the raw image with the reference image to determine the ROI within the limits of the foreground and background of the image. Comparing the ROI to the height (e.g., the length of the image in a longitudinal direction) of the full image results in the determination of the amount of liquid in the vessel. For instance, experimental data is provided to better illustrate method 300. Referring now to FIGS. 4A and 4B, chart 400 includes four test liquids a-d (e.g., different vessels and liquid color) that underwent the image segmentation of the image segmentation system 100. As shown, the first column displays the raw images. The second column illustrates the raw image converted to a colorspace. For instance, here the images are in the HSV colorspace where, the hue (H) is expressed in green, the saturation (S) is expressed in blue, and the value (V) is expressed in red. Because the hue is mostly independent to changes in the lighting conditions, HSV was the channel selected in this implementation. Following this conversion, the mask is passed through the watershed algorithm to reveal the resulting segmented image in the third column. When more than one area is produced (contoured in blue in the "Final bbox" column), only the biggest one is retained. The last column is simply a ratio between the height of the highlighted bounding box and the height of the raw image. This ratio is representative of the amount of liquid contained in the glass.

As described herein, if the ratio represented of the amount of liquid contained in the glass is below a threshold value (e.g., 30%), the flight crew is notified and can take action before the passenger requests service. By allowing the crew members to anticipate when one passenger might be about to finish their drink, and are therefore in close need of a refill, or have their glass removed, a frictionless and seamless passenger experience is enabled, in addition to reducing the crew workload.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for operating an image segmentation system, the method comprising:
receiving image data from a sensor;
detecting a vessel is present in the image data;
extracting a region of interest; and
classifying the image data based on the region of interest.

2. The method of claim 1, further comprising continuously capturing the image data.

3. The method of claim 1 or 2, further comprising processing the image data.

4. The method of claim 3, wherein processing the image data comprises segmenting the image data.

5. The method of claim 4, further comprising determining the segmented image data is below a threshold level; and optionally
further comprising transmitting a notification in response to the segmented image data being below the threshold level.

6. The method of any preceding claim, wherein the sensor is a camera.

7. A method of image segmentation processing of an image segmentation system, the method comprising:
receiving a raw image;
converting the raw image to a colorspace to produce a converted image;
performing adaptive thresholding on the converted image to produce a threshold image;
eroding the threshold image;
dilating the threshold image;
combining the eroded threshold image and the dilated threshold image to form a reference image;
comparing the raw image with the reference image to determine a region of interest;
and
comparing the region of interest to a height of the raw image to determine a ratio of the region of interest to the height.

8. The method of claim 7, wherein the ratio of the region of interest to the height of the raw image is indicative of an amount of liquid in a vessel; and/or wherein the eroded threshold image is a foreground image.

9. The method of claim 8, wherein the dilated threshold image is a background image; and optionally wherein the region of interest is within a limit of the foreground image and a limit of the background image.

10. The method of claim 7, 8 or 9, wherein eroding the threshold image comprises trimming an edge of the threshold image; and/or wherein dilating a threshold image comprises making an edge larger.

11. The method of claim 9 or 10, further comprising neutering the background to set an absolute mean value.

12. The method of any of claims 7 to 11, wherein the colorspace is RGB, HSV, or YCbCr.

13. A non-transitory, tangible computer readable storage medium having instructions stored thereon that, in response to execution by a processor, cause the processor to perform operations comprising:
receiving a raw image;
converting the raw image to a colorspace to produce a converted image;
performing adaptive thresholding on the converted image to produce a threshold image;
eroding the threshold image;
dilating the threshold image;
combining the eroded threshold image and the dilated threshold image to form a reference image;
comparing the raw image with the reference image to determine a region of interest;
and
comparing the region of interest to a height of the raw image to determine a ratio of the region of interest to the height.

14. The non-transitory, tangible computer readable storage medium of claim 13, wherein the operations further comprise eroding the threshold image to form a foreground image.

15. The non-transitory, tangible computer readable storage medium of claim 13, wherein the operations further comprise dilating the threshold image to form a background image; and optionally wherein the operations further comprise neutering the background to set an absolute mean value.
